# EUROPÄISCHE PATENTANMELDUNG

(11) **EP 1 251 029 A2**
(43) Veröffentlichungstag der Anmeldung: **23.10.2002**
(21) Anmeldenummer: 02008256.6
(22) Anmeldetag: 19.04.2002
(51) Int. Cl.: B60N 3/04

(54) **Auskleidungsteil für Fahrzeuge**

(30) Priorität: 20.04.2001 DE 10119410
(71) Anmelder: Intier Automotive Näher GmbH, 71706 Markgröningen (DE)
(72) Erfinder: Vorlaufer, Erwin, 71706 Markgröningen (DE)
(74) Vertreter: Patentanwälte Ruff, Wilhelm, Beier, Dauster & Partner

(57) **Zusammenfassung**

2.1. Die Erfindung bezieht sich auf ein Auskleidungsteil mit einem flächigen Basiskörper mit einer Vorder- und einer Rückseite, der mindestens eine Öffnung zur Aufnahme mindestens eines Einlegeelements aufweist.
2.2. Erfindungsgemäß ist die mindestens eine Öffnung durch ein an der Rückseite des Basiskörpers angeordnetes Abschlusselement (6) abgeschlossen.
2.3. Verwendung z.B. als Auskleidungsteil im Fußraum von Kraftfahrzeugen.

## Beschreibung

Die Erfindung betrifft ein Auskleidungsteil, insbesondere für Kraftfahrzeuge, mit einem flächigen Basiskörper mit einer Vorder- und einer Rückseite, der mindestens eine Öffnung zur Aufnahme mindestens eines Einlegeelements aufweist und ein Auskleidungsteil mit wenigstens einem integrierten, im wesentlichen flächigen Einlegeelement für den Innenraum eines Fahrzeuges.

Aus dem Stand der Technik, u.a. der DE 19840577A1, ist es bekannt, an dem Auskleidungsteil "Bodenbelag mit Fußraummatte" die Oberflächenbündigkeit beider Teile zueinander dadurch auszubilden, dass an dem Bodenbelag oder auch dem Fußraumboden eine Vertiefung für die verschiebesichere Aufnahme und Arretierung der Fußraummatte vorgesehen ist.

Für die verschiebesichere und rutschfeste Aufnahme eines Einlegeteiles, z. B. einer Fußraummatte lehrt und ist es praktizierter Stand der Technik, das Einlegeteil mittels üblicher Mittel und Verfahren an dem Auskleidungsteil, z. B. dem Bodenbelag, zu befestigen bzw. festzulegen.

Aus der DE 19928720A1 ist es beispielsweise bekannt, in einer Fußraumverkleidung eine wannenartige Vertiefung vorzusehen, die auch als Durchbruch bezeichnet wird. Es wird hervorgehoben, dass sich Einsatzkörper nicht nur farblich sondern auch in der Höhe vom Basiskörper unterscheiden können.

Bei den vorgenannten Lösungen und Gestaltungen für ein Auskleidungsteil mit einem integrierten Einlegeelement, so vielfältig der Spielraum für den Konstrukteur und Designer auch ist, ist eigen, dass jede weitere Verbesserung und Vervollkommnung, eine Erhöhung der Gebrauchswerteigenschaften, mit einer Vergrößerung der Bauhöhe des Auskleidungsteiles einher geht.

Der Erfindung liegt daher die Aufgabe zugrunde, ein Auskleidungsteil, mit wenigstens einem in ihm bzw. an ihm integrierten Einlegeelement für den Innenraum eines Fahrzeuges, z. B. den Fahrgastraum oder den Kofferraum, bei Beibehaltung der akustischen und mechanischen Eigenschaften fortzubilden und zu vervollkommnen.

Ferner soll das Auskleidungsteil rückseitig beschichtbar und aus dem Auskleidungsteil zerstörungsfrei auslösbar sein.

Diese Aufgabe wird durch ein Auskleidungsteil nach Anspruch 1 und ein Auskleidungsteil nach Anspruch 3 gelöst.

Das erfindungsgemäße Auskleidungsteil, das insbesondere als Fußraumauskleidung mit integrierter Fußmatte dient, weist mindestens ein an der Rückseite eines Basiskörpers angeordnetes Abschlusselement auf, das mindestens eine Öffnung im Basiskörper abschließt. Als Rückseite wird hierbei diejenige Seite des Basiskörpers bezeichnet, auf welcher der Basiskörper bei einer Positionierung, beispielsweise im Fußraum eines Kraftfahrzeugs, aufliegt bzw. von einer betrachtenden Person abweist. Als Vorderseite bzw. Oberfläche des Basiskörpers wird die der Rückseite gegenüberliegende Seite bezeichnet, d.h. diejenige, die dem Betrachter zugewandt ist. Unter Öffnung wird eine durchgehende Aussparung im Material des Basiskörpers verstanden, die beliebig geformt sein kann.

Durch die erfindungsgemäße Anordnung des Abschlusselements wird die Bauhöhe eines Auskleidungsteils, in das ein Einlegeelement einlegbar und wieder entnehmbar ist, im Vergleich zu einem Auskleidungsteil, bei dem eine muldenförmige Vertiefung zur Aufnahme des Einlegeelements in den Basiskörper hineinverformt ist, reduziert, da bei der Ausführungsform mit muldenförmiger Vertiefung im Bereich des Einlegeelements zwei vergleichsweise dicke Schichten aufeinander angeordnet sind. Bei dem erfindungsgemäßen Auskleidungsteil wird das Einlegeelement auf dem vergleichsweise dünnen Abschlusselement angeordnet, was zu einer Reduktion der Bauhöhe führt. Einlegeelemente können beispielsweise Textileinleger, insbesondere Fußmatten, oder Holzoder Metalleinleger sein.

Wird die Öffnung nicht durch ein Abschlusselement abgeschlossen, kann Schmutz oder Feuchtigkeit in die unter dem Basiselement liegenden Schichten eindringen. In dem Abschlusselement können zusätzlich multifunktionale Elemente vorhanden sein, die beispielsweise für eine zuverlässige Verbindung zwischen Basiselement und Einlegeelement sorgen. Des weiteren wird eine eventuell vorgenommene Hinterschäumung des Auskleidungsteils durch das Abschlusselement wesentlich vereinfacht.

In einer besonders bevorzugten Ausführungsform ist das Einlegeelement so ausgebildet und so in die Öffnung einlegbar, dass die Vorderseiten des Einlegeelements und des Basiskörpers oberflächenbündig verlaufen und das Einlegeelement zerstörungsfrei wieder entnehmbar ist. Die Vorderseite des Einlegeelements ist die dem Abschlusselement abgewandte Seite, wenn das Einlegeelement in den Basiskörper eingelegt ist.

Ein oder mehrere nebeneinanderliegende Einlegeelemente können in mindestens eine Öffnung des Basiskörpers eingelegt werden. Durch die oberflächenbündige Anordnung, bei der im Übergangsbereich zwischen der Oberfläche des Basiskörper und der Oberfläche des Einlegeelements keine Stufen gebildet werden, kann beispielsweise bei Verwendung des Auskleidungsteils im Bodenbereich von Kraftfahrzeugen erreicht werden, dass ein Fahrzeuginsasse seine Schuhe ungehindert, ohne zu Verhaken, über die Fußmatte bewegen kann. Das oder die Einlegeelemente können, beispielsweise zu Reinigungszwecken, zerstörungsfrei entnommen werden und gereinigt oder durch ein entsprechendes Neuteil ersetzt wieder eingesetzt werden.

In einer weiteren bevorzugten Ausführungsform ist auf der Vorderseite des Abschlusselements und/oder auf der Rückseite des Einlegeelements mindestens ein Arretierungselement vorgesehen. Mit Hilfe des Arretierungselements kann das Einlegeelement auf dem Abschlusselement arretiert werden, was beispielsweise ein Verrutschen des Einlegeelements gegenüber dem Abschlusselement wirkungsvoll verhindert. Die Arretierung ist zerstörungsfrei lösbar ausgebildet, wodurch ein wiederholtes Einlegen und Entnehmen des Einlegeelements ermöglicht wird. Als Arretierungselemente, die vorzugsweise kraftschlüssig ausgebildet sind, können beispielsweise nadelartige Erhebungen, Klettband und/oder Magnetfolien auf dem Abschlusselement und/oder dem Einlegeelement verwendet werden. Es können mehrere Einlegeelemente durch jeweils zugeordnete Arretierungselemente auf einem Abschlusselement befestigt werden. Das mindestens eine Arretierungselement kann, insbesondere wenn ein oder mehrere Einlegeelemente als Dekor verwendet werden, auf der Abschlussplatte als, insbesondere zylindrische, Vertiefung und auf dem Einlegeelement als zugehöriges, insbesondere zapfenartiges, Gegenstück gebildet sein. Die Vertiefung ist auf der Vorderseite des Abschlusselements so angebracht, dass die Vertiefung zur Rückseite des Abschlusselements hin dichtend abgeschlossen ist. Hierbei bilden die Vertiefung auf dem Abschlusselement und das zugehörige Gegenstück auf dem Einlegeelement eine Steckverbindung, wobei zur Arretierung des Einlegeelements das Arretierungselement in die zugehörige Vertiefung eingeschoben wird. Es können pro Einlegeelement mehr als ein Arretierungselement vorgesehen sein, was beispielsweise eine verdrehsichere Aufnahme des Einlegeelements ermöglicht.

In einer weiteren bevorzugten Ausführungsform kann eine Fuge zwischen Basiskörper und eingelegtem Einlegeelement durch einen in die Fuge einsetzbaren, insbesondere T-förmigen Rahmen, abgedeckt werden. Wird das Einlegeelement in die Öffnung des Basiskörpers eingesetzt bzw. eingelegt, kann in einem Randbereich zwischen Basiskörper und Einlegeelement eine Fuge entstehen. Dies kann aus ästhetischen und/oder funktionalen Gründen störend sein. Um die Fuge auf der Vorderseite des Basiskörpers bzw. des Einlegeelements abzudecken, wird der, insbesondere T-förmige, Rahmen umlaufend derart in die Fuge eingesetzt, dass ein Teil des Rahmens in die Fuge eingeschoben wird und der nicht eingeschobene Teil des Rahmens die Fuge überdeckt.

Der Rahmen ist vorzugsweise am Abschlusselement festlegbar. In einer weiteren bevorzugten Ausführungsform ist auf der Vorderseite des Abschlusselements mindestens ein Aufnahmeelement zur, vorzugsweise einrastbaren, Aufnahme eines Teils des in die Fuge eingesetzten Rahmens angeordnet. Der in die Fuge eingeschobene Teil des Rahmens wird teilweise in das Aufnahmeelement eingeführt. Der Rahmen wird dadurch bezüglich des Abschlusselements fixiert.

In einer bevorzugten Ausführungsform ist das Abschlusselement als flächige dünnwandige Platte bzw. Folie, insbesondere aus Kunststoff, ausgebildet. Das so gebildete dünnwandige Abschlusselement bedingt keine zusätzliche Bauhöhe des Auskleidungsteils, beispielsweise im Fußraum eines Kraftfahrzeugs. Solche dünnwandigen Platten bzw. Folien sind einfach und kostengünstig herzustellen. Mit Vorteil beträgt die Wandstärke des Abschlusselements 0,5 mm bis 3 mm, insbesondere 1 mm bis 2 mm.

In einer weiteren bevorzugten Ausführungsform enthält das Abschlusselement mindestens einen mehrdimensional formbaren Bereich, der insbesondere mit Hilfe mindestens eines Filmscharniers gebildet ist. Wird das erfindungsgemäße Auskleidungsteil an seinem Bestimmungsort, beispielsweise in einem Kraftfahrzeug, angebracht, kann das Abschlusselement mit Hilfe des formbaren Bereichs an die Kontur einer Unterlage, auf der das Abschlusselement aufliegt, angepasst werden.

In einer weiteren bevorzugten Ausführungsform sind das Abschlusselement und der Basiskörper feuchtigkeitsdicht, insbesondere unter Verwendung eines umlaufenden Dichtelements, miteinander verbunden. Das Dichtelement verhindert das Eindringen von Feuchtigkeit oder Schmutz in einen Bereich auf der Rückseite des Basiselements. Das Basiselement kann mit Vorteil auch als angeschäumtes Formteil bei einer Hinterschäumung dienen und verhindert bei einer Hinterschäumung von Basiselement und Abschlusselement, dass Schaum auf die Vorderseite von Basiselement bzw. Abschlusselement hindurchtritt. Eine vorzugsweise kraftschlüssige Verbindung zwischen Basiselement und Abschlusselement kann mit Hilfe einer Verklebung der sich gegenseitig überlappenden Randbereiche von Basiselement und Abschlusselement realisiert werden. Das Dichtelement kann selbstklebend ausgeführt sein.

In einer weiteren bevorzugten Ausführungsform sind das Abschlusselement und die Grundplatte an ihren jeweiligen Rückseiten hinterschäumt. Die Hinterschäumung wird in einem Schäumvorgang vorgenommen. Als Schaum kann beispielsweise Weichschaum, wie PU-Weichschaum, verwendet werden.

In einer weiteren bevorzugten Ausführungsform weisen das Abschlusselement und der Basiskörper am Öffnungsrand einen sich gegenseitig überlappenden Randbereich auf und das Abschlusselement weist vorzugsweise in diesem Randbereich Öffnungen auf, durch die eine formund/oder kraftschlüssige Verbindung zwischen dem Abschlusselement bzw. der Grundplatte und dem Basiskörper durch verfestigten Schaum, der während eines Schäumvorgangs durch die Öffnung hindurchtritt, bewirkt wird. Während der Hinterschäumung, bei fließfähigem Schaum, tritt durch die Öffnungen von der Rückseite des Abschlusselements Schaum in den sich gegenseitig überlappenden Randbereich ein. Nach einer gewissen Zeit nimmt der Schaum einen abgebundenen Endzustand an, d.h. er verliert seine Fließfähigkeit bzw. verfestigt sich. Es entsteht eine form- und/oder kraftschlüssige Verbindung zwischen dem Abschlusselement und dem Basiskörper.

In einer weiteren bevorzugten Ausführungsform weist das Abschlusselement an der Unterseite Verbindungselemente auf, die eine formund/oder kraftschlüssige Verbindung des Abschlusselements mit dem verfestigten Schaum bewirken. Die Verbindungselemente verhindern ein Verrutschen bzw. Ablösen des Schaums vom Abschlusselement. Sie können beispielsweise als Hohlzylinder am Abschlusselement angeordnet sein.

In einer bevorzugten Ausführungsform ist der Basiskörper aus einem Teppichformteil gebildet, das insbesonders noch oben gezogene Randabschnitte aufweist. Der Teppich ist insbesondere zweischichtig aufgebaut und weist an seiner Vorderseite beispielsweise eine Taft- oder Nadelfilzschicht und an seiner Rückseite eine Schwer- bzw. Trägerschicht auf. Die Teppichschicht ist die dem Benutzer zugewandte Seite, die Trägerschicht dient der Formstabilität und verbessert die akustischen Eigenschaften des Teppichs. Bei Verwendung des Auskleidungsteils im Fußraum von Kraftfahrzeugen ist eine schalenförmige Ausgestaltung vorteilhaft, da der Fußraum so ideal ausgefüllt ist.

In einer weiteren bevorzugten Ausführungsform ist das Einlegeelement im wesentlichen das Materialstück, das zur Bildung der Öffnung des Basiskörpers aus dem Basiskörper entnommen ist. Dies dient hauptsächlich der Senkung der Material- und Formungskosten des Auskleidungsteils, da keine zusätzlichen Materialkosten für das Einlegeteil entstehen.

Verbindungen unterschiedlicher Materialien sind vorteilhafterweise so ausgebildet, dass diese Materialien beim Recyceln des Kraftfahrzeugs im wesentlichen zerstörungsfrei voneinander trennbar sind.

Das erfindungsgemäße Auskleidungsteil mit einem integrierten Einlegeelement für den Innenraum eines Fahrzeuges vereint in bislang nicht bekannter vorteilhafter Weise ein Höchstmaß an Gebrauchswerteigenschaften, besonders in funktioneller und dekorativer, fast luxuriöser, Hinsicht mit einer hohen Effizienz des Herstellungsverfahren.

Das Ergebnis der erfindungsgemäßen Maßnahmen ist besonders markant aus der Sicht, dass diese die durchgängig gleiche Bauhöhe von Auskleidungsteil und integriertem Einlegeelement gewährleisten, ohne, dass dafür in dem das Einlegeelement aufnehmenden Auskleidungsteil, z.B. einem Teppich-Formteil, fertigungstechnisch aufwendige muldenförmige Vertiefungen vorzusehen sind.

Die erfindungsgemäße Lösung besteht in dem gefundenen Auskleidungsteil mit einem kompatiblen Einlegeelement, das oberflächenbündig, absatzlos integriert ist und zu dessen oberflächenbündiger Integration keine muldenförmige Vorkehrung am aufnehmenden Teil erforderlich ist.

Von nicht zu unterschätzendem Vorteil ist auch der Effekt, dass die den Komfort des Auskleidungsteiles verbessernden Maßnahmen mit keiner Mehrinanspruchnahme von zusätzlicher Innenraumhöhe bzw. -breite einher gehen.

Erfindungsgemäß gelöst wird die Aufgabe vor allem durch die Findung der Kombination, der Verknüpfung des Formteiles, als Basiselement des Auskleidungsteiles, mit der dünnwandigen, mit adapterähnlichen Vorkehrungen versehenen, Grundplatte, mittels der die Aussparung für das Einlegeelement an bzw. in dem Formteil, an dessen Rück- bzw. Unterseite abgedeckt bzw. überdeckt ist, und mittels derer das Einlegeelement arretiert ist.

Zur Erfindung gehörig ist, nicht nur das Einlegeelement in einer Vielzahl von in Werkstoff, Dekor und funktionellen Eigenschaften zu kombinieren und zu variieren, sondern gemäß einer vorteilhaften Weiterbildung auch, dass es zerstörungsfrei aus dem Auskleidungsteil auslösbar und dieses somit partiell veränder- und erneuerbar ist.

Dass das geschaffene Auskleidungsteil insbesondere so ausgeführt ist, dass es, bei Beibehaltung der Auslösbarkeit des Einlegeelementes, komplett rückseitig beschichtbar ist, so z. B. mit Polyurethanschaum, ist sowohl fertigungstechnisch als auch funktionell von großem Vorteil.

Von besonderer Bedeutung für die vorliegende Erfindung ist die erfindungsgemäße Grundplatte, vorzugsweise aus Kunststoff. Diese Grundplatte, mit einer Vielzahl von vom Erfindungsgedanken erfaßten Gestaltungs- und Ausführungsformen, eröffnet dem Fachmann die Möglichkeit, das Auskleidungsteil mit speziellen Anwendungsmöglichkeiten zu versehen und es sowohl für die Bodenverkleidung, die Kofferraumauskleidung, die Hutablage als auch die Seitenverkleidung auszubilden.

Vorteilhaft ist, dass das Formteil aus überwiegend textilen, verfestigten Fasern besteht, plastisch geformt, z. B. tiefgezogen, unter- bzw. rückseitig mit oder ohne Beschichtung ist und mittels wenigstens eines in ihm integrierten Einlegeelementes das Auskleidungsteil bildet und dieses mittels des bzw. der Einlegeelemente partiell erneuer-, austausch-, funktionell veränder- und/oder ergänzbar ist.

In einer bevorzugten Ausführungsform ist die Aussparung in der Fläche des Formteiles, an dessen Rück bzw. Unterseite, mit einer dünnwandigen Grundplatte , vorzugsweise aus Kunststoff oder einem äquivalenten Material, die Randbereiche der Aussparung überlappend, abgedeckt.

In einer weiteren bevorzugten Ausführungsform ist das Einlegeelement aus den Werkstoffen bzw. Materialien, auch deren Kombinationen miteinander, wie Textilien, Holz, Stein, Keramik, Metall, Linoleum, Kunststoff, Leder, Kunstleder oder anderen äquivalenten Materialien hergestellt. Unterschiedliche Materialien können in intarsienartiger Ausbildung nebeneinander liegen.

Einer weiteren bevorzugten Ausführungsform ist zueigen, daß die einander zugewandten Randbereiche der dünnwandigen Grundplatte und des Formteiles kraftschlüssig dichtend, z. B. mittels eines selbstklebenden, ringähnlich umlaufenden Dichtungsstreifens verbunden sind und somit das unkontrollierte Eindringen von Kunststoffschaum, z. B. auf die Vorderseite der dünnwandigen Grundplatte, sogenannte Schaumdurchschläge, vermieden werden.

Weiterhin sind gemäß einer bevorzugten Ausführungsform in dem Randbereich der Grundplatte, der von dem des Formteiles überdeckt ist, Durchbrüche für den Durchlaß von Kunststoffschaum während des Hinterschäumprozesses vorgesehen und mittels des definiert durchgedrungenen Kunststoffschaumes ist in dem Randbereich eine homogene Verbindung zwischen dem Formteil und dem Kunststoffschaum, bei formund kraftschlüssiger Festlegung der Grundplatte, ausgebildet.

Einer weiteren bevorzugten Ausführungsform ist zueigen, dass an der Grundplatte, unter- oder rückseitig grund- bzw. sacklochartige Vorkehrungen für die form- und/oder kraftschlüssige Verbindung mit dem Kunststoffschaum ausgebildet sind.

Weiterhin sind insbesondere an der Grundplatte im Randbereich, etwa in Höhe der Stoßstelle des Überganges vom Formteil zum Einlegeelement, umlaufend Vorkehrungen für eine lösbare Verbindung, z. B. einer Schnappverbindung, mit einem den Übergang abdeckenden Rahmen ausgebildet.

Eine weitere bevorzugte Ausführungsform wird dadurch charakterisiert, dass an der Grundplatte definiert eine oder mehrere filmscharnierähnliche Vorkehrungen, mittels derer die Grundplatte vorbestimmt dreidimensional formbar ist, ausgebildet sind.

In einer weiteren bevorzugten Ausführungsform sind an der Grundplatte, auf der dem Einlegeelement zugewandten Seite, Vorkehrungen für eine form- und/oder kraftschlüssige Arretierung des Einlegeelementes, z. B. nadelartige Erhebungen, Klettband, Magnetfolien oder äquivalente Mittel ausgebildet und erforderlichenfalls entsprechende Pendants an der Unterseite des Einlegeelementes gegeben.

Weiterhin sind insbesondere an der Grundplatte, auf der dem bzw. den Einlegeelementen zugewandten Seite grund- bzw. sacklochartige Vorkehrungen für die lösbare, verdrehsichere Befestigung und Arretierung, z. B. mittels eines dübelähnlichen Schnappverbinders, des bzw. der Einlegeelemente, eventuell in vorgegebener gestalterischer Anordnung, ausgebildet.

Des weiteren ist vorteilhaft die Oberfläche des die lösbare Verbindung abdeckenden Rahmens, aus Kunststoff, oder Metall, ein- oder mehrfarbig, auch mit einer Kaschierung versehen, mit einem Dekor ausgebildet.

Eine weitere bevorzugte Ausführungsform ist dadurch charakterisiert, dass im Bereich der der Grundplatte zugewandten Seite des die lösbare Verbindung abdeckenden Rahmens, den Rahmenumfang umlaufend oder partiell angeordnet, Lichtquellen angeordnet sind und deren Wirkung dadurch zur Geltung kommt, dass dies bei der Dimensionierung des Einlegeelementes oder der Farbgebung des Rahmens, z. B. transparent, durchscheinend, berücksichtigt ist.

Des weiteren ist vorteilhaft der die lösbare Verbindung abdeckende Rahmen und die Grundplatte einstückig, der Rahmen an die Grundplatte angeformt.

Eine weitere bevorzugte Ausführungsform ist dadurch charakterisiert, dass der die lösbare Verbindung abdeckende und an die Grundplatte angeformte Rahmen voneinander unterschiedlich im Material, dessen Farbe oder mechanischen Eigenschaften sind, das Teil z. B. einstückig im Mehrkomponenten-Spritzgießverfahren hergestellt oder die Grundplatte an den Rahmen angespritzt ist.

Des weiteren ist vorteilhaft das Einlegeelement aus dem Ausschnitt aus dem Formteil hergestellt.

Eine weitere bevorzugte Ausführungsform ist dadurch charakterisiert, dass das Auskleidungsteil für die Verwendung in der aus Fahrer-, Beifahrer- und Fondboden bestehenden Bodengruppe prädestiniert ist.

Des weiteren ist das Einlegeelement vorteilhaft mit Vorkehrungen für die Temperierung und/oder Klimatisierung des Fahrzeuginnenraumes ausgebildet. Diese Vorkehrungen sind zweckmäßigerweise mit Versorgungsleitungen bzw. mit in das Auskleidungsteil führenden Armaturen kompatibel.

Die vorstehenden und weiteren Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

Vorteilhafte, nachfolgend beschriebene Ausführungsformen der Erfindung sind in den Zeichnungen dargestellt, in denen zeigen:
- Fig. 1: ein gattungsgemäßes Auskleidungsteil (1), bestehend aus dem Basis- bzw. Formteil (2), dem Einlegeelement (3) und dem die Verbindungsstelle abdeckenden Rahmen (4).
- Fig. 2: ein erfindungsgemäßes Formteil (2) mit der Aussparung (7) für das Einlegeelement (3).
- Fig. 3: eine erfindungsgemäße Grundplatte (6) mit den ausgebildeten Vorkehrungen (8) für dreidimensionale Formbarkeit, den Durchbrüchen (9) für den Durchtritt von Kunststoffschaum (5) im Randbereich, den Vorkehrungen (10) für eine rutsch- und schiebefeste Arretierung des Einlegeelementes und den Vorkehrungen (11) für eine lösbare Verbindung mit dem Rahmen.
- Fig. 4: eine Schnittdarstellung eines erfindungsgemäßen Auskleidungsteiles (1) mit der erfindungsgemäßen Grundplatte (6), die mit dem Einlegeelement (3) die erfindungsgemäße Aussparung (7) ausfüllt und den mit der Grundplatte (6) lösbar verbundenen, die Verbindungsstelle abdeckenden Rahmen (4).
- Fig. 5: eine Schnittdarstellung durch den Randbereich eines erfindungsgemäßen Auskleidungsteiles (1), ohne Einlegeelement, mit der Dichtung (12) und den Vorkehrungen (9) und (13) für die Verbindung von Grundplatte (6) und Formteil (2) mit dem Kunststoffschaum (5) sowie den der Grundplatte (6) ausgebildeten Vorkehrungen (11) für eine Verbindung mit dem Rahmen (4).
- Fig. 6: eine Schnittdarstellung durch den Randbereich eines erfindungsgemäßen Auskleidungsteiles einer zweiten Ausführungsform der Erfindung.

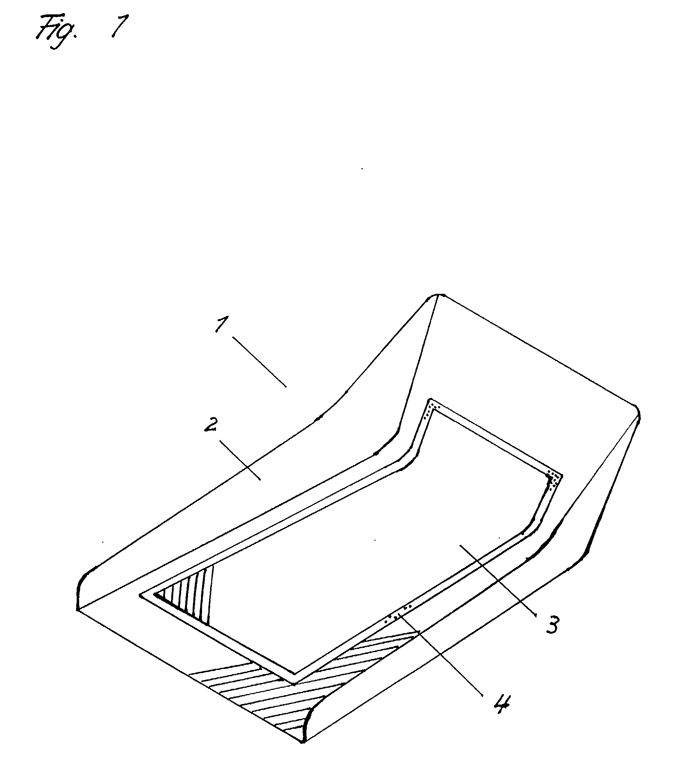

Fig. 1 zeigt ein Auskleidungsteil 1, bestehend aus einem Basiskörper bzw. Basisteil 2, einem eingelegten Einlegeelement 3 und einem Rahmen 4, der umlaufend eine Fuge bzw. eine Verbindungsstelle auf der Oberseite des Auskleidungsteils 1 zwischen Basiskörper 2 und Einlegeelement 3 abdeckt. Das Auskleidungsteil kann beispielsweise ein in den Fußraum eines Kraftfahrzeugs einlegbares Auskleidungsteil sein. Der schalen- und flächenförmige Basiskörper 2 ist hier aus einem Teppichformteil gebildet, wobei der Teppich aus einer Teppichschicht an seiner Vorderseite und einer Trägerschicht an seiner Rückseite besteht. Das Einlegeelement 3, von dem nur die Vorderseite sichtbar ist, ist derart in den Basiskörper 2 eingelegt, dass die Vorderseite des Einlegeelements und die Vorderseite des Basiskörpers oberflächenbündig verlaufen.

Fig. 2 zeigt den Basiskörper 2 mit einer Öffnung 7 zur Aufnahme des Einlegeelements 3 von Fig. 1.

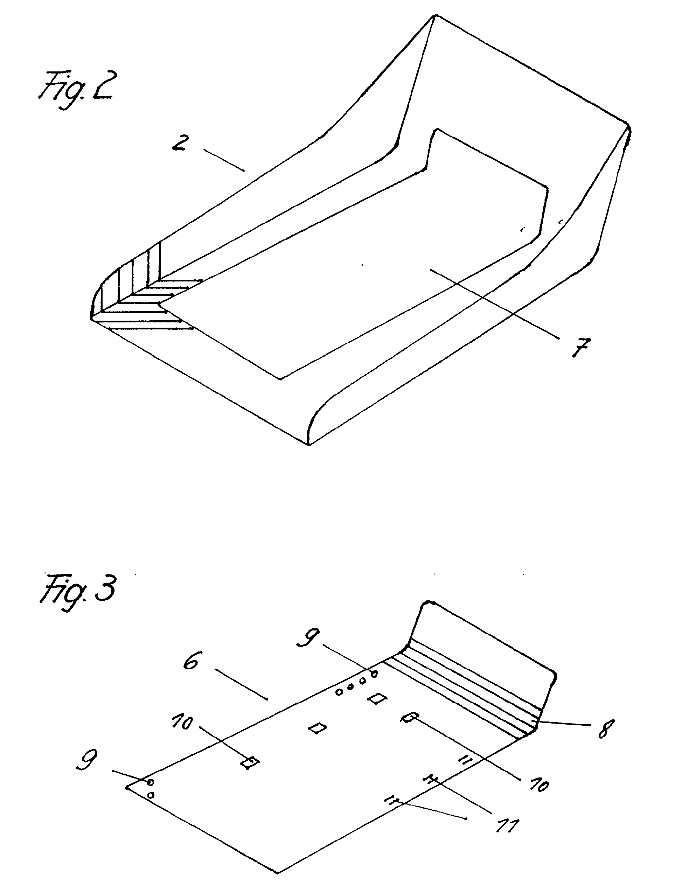

Fig. 3 zeigt ein erfindungsgemäßes Abschlusselement bzw. eine Grundplatte 6 zum Abschluss der Öffnung des Basiskörpers an seiner Unterseite mit Arretierungselementen bzw. Vorkehrungen 10 für eine Arretierung des Einlegeelements, ein Aufnahmeelement bzw. Vorkehrungen 11 für eine lösbare Aufnahme bzw. Verbindung mit dem Rahmen, Vorkehrungen 8 für eine drei- bzw. mehrdimensionale Formbarkeit eines mehrdimensional formbaren Bereichs und Öffnungen bzw. Durchbrüche 9. Das Abschlusselement ist als flächige, dünnwandige biegesteife Kunststoffplatte ausgebildet, mit einer Aufbiegung im Bereich der Filmscharniere 8. Die Platte besteht vorzugsweise aus ABS.

Die Arretierungselemente 10 zur Fixierung des Einlegeelements auf dem Abschlusselement 6 sind als dornenartige Stifte gleichmäßig auf verschiedenen Bereichen der Vorderseite des Abschlusselements 6 angeordnet und verhindern ein horizontales Verrutschen des eingelegten Einlegeelements in der Öffnung des Basiskörpers. Horizontal bedeutet hierbei parallel zur Ausdehnung des Abschlusselements. Das Einlegeelement kann zerstörungsfrei senkrecht bzw. vertikal zur Ausdehnung des Abschlusselements entnommen werden.

Das Aufnahmeelement 11 ist auf der Oberfläche des Abschlusselements 6 derart umlaufend angeordnet, dass es entlang bzw. unterhalb einer Fuge verläuft, die bei Einlegen des Einlegeelements in die Öffnung zwischen Basiskörper und Einlegeelement entsteht. Das Aufnahmeelement 11 nimmt einen Teil des Rahmens auf, wenn dieser zur Abdeckung der Fuge eingesetzt wird und fixiert den Rahmen in der Fuge.

Die Vorkehrungen 8 für eine mehrdimensionale Formbarkeit in einem mehrdimensional formbaren Bereich sind als Filmscharniere ausgebildet und ermöglichen die Anpassung des mehrdimensional formbaren Bereichs an eine Kontur einer Auflagefläche.

Die Öffnungen 9 sind in einem Bereich des Abschlusselements 6 angeordnet, der sich bei Anordnung des Abschlusselements 6 am Basiskörper mit dessen Öffnungsrand überlappt. Durch die Öffnungen 9 tritt während eines Hinterschäumvorgangs fließfähiger Schaum von der Unterseite des Abschlusselements 6 hindurch und verteilt sich im Überlappungsbereich zwischen Abschlusselement und Basiskörper. Wenn der flüssige Schaum abbindet, entsteht eine form- und kraftschlüssige Verbindung zwischen dem Abschlusselement 6 und dem Basiskörper.

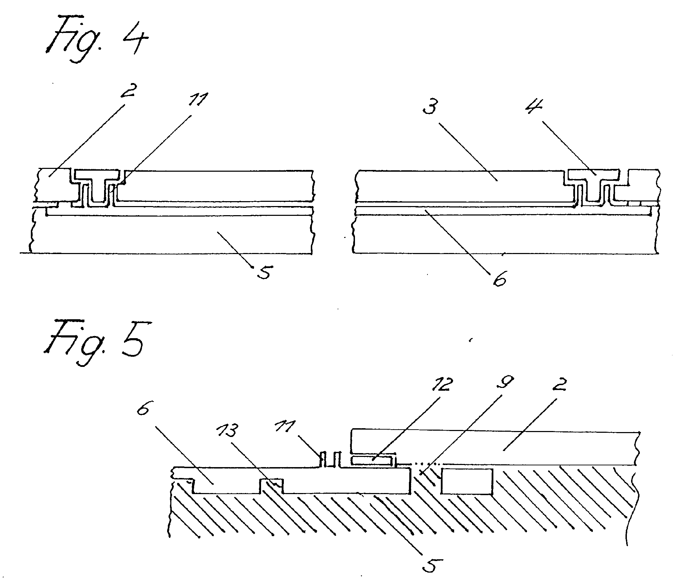

Fig. 4 zeigt eine Schnittdarstellung des Auskleidungsteils mit dem Basiskörper 2, dem an der Unterseite des Basiskörpers 2 angeordneten Abschlusselement 6, dem in die Öffnung eingelegten Einlegeelement 3, dem Aufnahmeelement 11, dem in das Aufnahmeelement 11 eingelegten Rahmen 4 und einer Hinterschäumung 5.

Das Einlegeelement 3 ist in die Öffnung des Basiskörpers eingelegt und liegt auf dem Abschlusselement 6 auf. Die Oberflächen des Einlegeelements und des Basiskörpers verlaufen oberflächenbündig. Der T-förmige Rahmen ist mit einem Teil seines zur Oberfläche des Einlegeelements senkrecht verlaufenden Schenkels in das Aufnahmeelement 11 eingeführt bzw. eingerastet. Der Rahmen wird dadurch kraft- bzw. entriegelbar formschlüssig im Aufnahmeelement 11 gehalten und ist gegen ein unbeabsichtigtes Herausrutschen aus der gewünschten Position gesichert. Der zur Oberfläche des Einlegeelements parallele Schenkel des Rahmens deckt die Fuge zwischen Basiskörper und Einlegeelement ab.

Fig. 5 zeigt eine Schnittdarstellung des Auskleidungsteils mit dem Basiskörper 2, dem an der Unterseite des Basiskörpers 2 angeordneten Abschlusselement 6, dem Aufnahmeelement 11, einer Hinterschäumung 5, einem Dichtelement bzw. einer Dichtung 12, der Öffnung 9 und Verbindungselementen bzw. Vorkehrungen 13.

Das Dichtelement 12 ist umlaufend zwischen Basiskörper und Abschlusselement in einem Bereich angeordnet, der sich bei Anordnung des Abschlusselements 6 am Basiskörper mit dessen Öffnungsrand überlappt. Das Dichtelement ist hier als Gummidichtlippe ausgeführt. Das Dichtelement 12 ist beidseitig mit dem Basiskörper 12 und dem Abschlusselement 6 verklebt und verbindet den Basiskörper 12 und das Abschlusselement 6 kraftschlüssig. Die Dichtung 12 verhindert das Eindringen von Schmutz und/oder Feuchtigkeit von der Vorderseite des Abschlusselements 6 in den Schaum 5. Des weiteren wird bei dem Hinterschäumungsprozess durch das Dichtelement 12 verhindert, dass Schaum von der Rückseite des Abschlusselements in Richtung der Vorderseite des Abschlusselements bzw. des Basiskörpers hindurchtritt.

Die Verbindungselemente 13 sind als Vertiefungen in der Abschlussplatte ausgeführt, die in einem gewissen Abstand über die gesamte Fläche der Rückseite des Abschlusselements angeordnet sind. Die Verbindungselemente 13 bewirken eine form- und kraftschlüssige Verbindung des Abschlusselements 6 mit dem Schaum 5, die aufgrund der glatten Unterseite des Abschlusselements ansonsten nur unzureichend gegeben wäre.

Anstatt der Bohrungen sind beispielsweise auch Hohlzylinder oder Hinterschneidungen aufweisende Teile denkbar, die an die Unterseite des Abschlusselements anspritzbar sind.

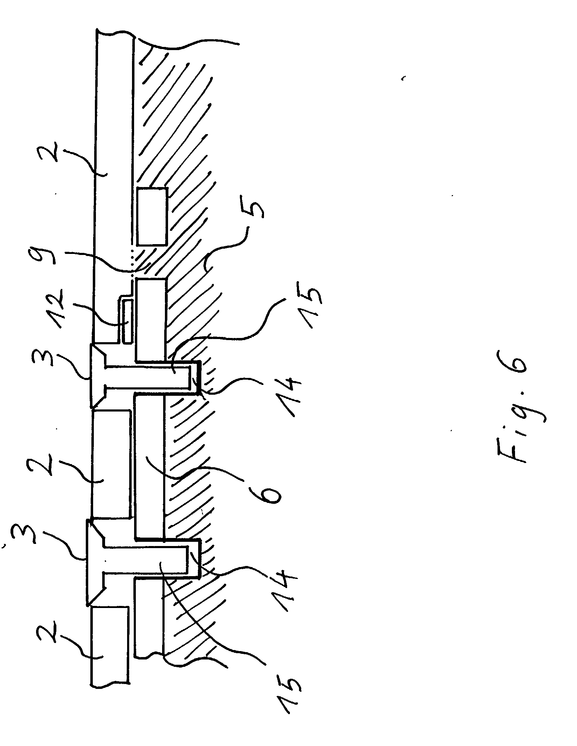

Fig. 6 zeigt eine Schnittdarstellung durch den Randbereich eines erfindungsgemäßen Auskleidungsteiles 1 gemäß einer zweiten Ausführungsform der Erfindung. Im Unterschied zu der oben beschriebenen Ausführungsform der Erfindung werden hier mehrere kleinflächige Einlegeelemente 3 in mehrere Öffnungen des Basiskörpers 2, insbesondere zu Verzierungszwecken, eingesetzt. Auf dem Abschlusselement 6 sind hierzu zylinderförmige Vertiefungen 14 gebildet, die an der Unterseite des Abschlusselements dichtend abgeschlossen sind. An den Einlegeelementen 3 angebrachte, zapfen- bzw. stiftartige Arretierungselemente 15 werden zur Fixierung der Einlegeelemente 3 im Abschlusselement 6 durch die Öffnungen im Basiskörper in die zugehörigen zylinderförmigen Vertiefungen 14 des Abschlusselementes 3 eingeschoben bzw. eingerastet. Sind pro Einlegeelement 3 mehrere Arretierungselemente 15 vorgesehen, kann ein unbeabsichtigtes Verdrehen des Einlegeelements 3 verhindert werden.

Die Ausführungsformen nach Fig. 4 bzw. Fig. 5 und Fig. 6 sind auch miteinander kombinierbar.

## Patentansprüche

1. Auskleidungsteil, insbesondere für Kraftfahrzeuge, mit einem flächigen Basiskörper (2) mit einer Vorder- und einer Rückseite, der mindestens eine Öffnung (7) zur Aufnahme mindestens eines Einlegeelements (3) aufweist,
**dadurch gekennzeichnet, dass**
die mindestens eine Öffnung (7) durch ein an der Rückseite des Basiskörpers (2) angeordnetes Abschlusselement (6) abgeschlossen ist.

2. Auskleidungsteil nach Anspruch 1, **dadurch gekennzeichnet, dass** das Einlegeelement in die Öffnung derart einlegbar ist, dass die Vorderseite des Einlegeelements und die Vorderseite des Basiskörpers oberflächenbündig verlaufen und das Einlegeelement zerstörungsfrei wieder entnehmbar ist.

3. Auskleidungsteil mit wenigstens einem integrierten, im wesentlichen flächigen Einlegeelement für den Innenraum eines Fahrzeuges, insbesondere nach Anspruch 1 oder 2,
**dadurch gekennzeichnet, dass**
das Auskleidungsteil (1) ein den Grund- bzw. Basiskörper bildendes Formteil (2) enthält, dass in der Fläche dieses Formteiles (2) wenigstens eine Aussparung (7) mittels wenigstens einer multifunktionalen dünnwandigen Grundplatte (6), die rück- bzw. unterseitig am Formteil (2) positioniert ist und wenigstens eines Einlegeelementes (3), das im wesentlichen flächig und/oder dreidimensional geformt ist, so ausgefüllt ist, dass, ohne Ausformung einer Konkavität an dem Formteil (2), für eine oberflächenbündige Positionierung eines Einlegeelementes, das Einlegeelement (3) und das dieses integrierende Formteil (2) von stufenlos gleicher Bauhöhe oberflächenbündig sind, dass das Einlegeelement (3) in dem Auskleidungsteil (1) horizontal schiebefest arretiert ist, aus diesem, im Bereich der miteinander korrespondierenden Randbereiche, in vertikaler Richtung gegenüber dem Auskleidungsteil (1), zerstörungsfrei auslösbar ist und die Verbindungsstelle zwischen Formteil und Einlegeteil mit einem Rahmen (4) abdeckbar ist.

4. Auskleidungsteil nach einem der vorhergehenden Ansprüche, **dadurch gekennzeichnet, dass** auf der Vorderseite des Abschlusselements bzw. der Grundplatte und/oder auf der Rückseite des Einlegeelements mindestens ein Arretierungselement (10, 14, 15) zur lösbaren Arretierung des Einlegeelements auf dem Abschlusselement bzw. der Grundplatte vorgesehen ist.

5. Auskleidungsteil nach Anspruch 4, **dadurch gekennzeichnet, dass** das mindestens eine Arretierungselement auf dem Abschlusselement bzw. der Grundplatte als nach unten abgeschlossene, insbesondere zylindrische, Vertiefung (14) gebildet ist und ein zugehöriges Arretierungselement auf dem Einlegeelement als ein, insbesondere zapfenartiges, Gegenstück (15) gebildet ist, das zur Arretierung in die Vertiefung eingeschoben werden kann.

6. Auskleidungsteil nach einem der vorhergehenden Ansprüche, **dadurch gekennzeichnet, dass** eine Fuge zwischen Basiskörper und eingelegtem Einlegeelement durch einen in die Fuge eingesetzten bzw. einsetzbaren, insbesondere T-förmigen, Rahmen (4) abgedeckt bzw. abdeckbar ist.

7. Auskleidungsteil nach Anspruch 6, **dadurch gekennzeichnet, dass** auf der Vorderseite des Abschlusselements bzw. der Grundplatte mindestens ein Aufnahmeelement (11) zur, vorzugsweise einrastbaren, Aufnahme eines Teils des in die Fuge eingesetzten Rahmens angeordnet ist.

8. Auskleidungsteil nach einem der vorhergehenden Ansprüche, **dadurch gekennzeichnet, dass** das Abschlusselement als flächige, dünnwandige Platte bzw. Folie, insbesondere aus Kunststoff, ausgebildet ist.

9. Auskleidungsteil nach einem der vorhergehenden Ansprüche, insbesondere Anspruch 8, **dadurch gekennzeichnet, dass** das Abschlusselement bzw. die Grundplatte mindestens einen mehrdimensional formbaren Bereich, insbesonders gebildet mit Hilfe mindestens eines Filmsscharniers (8), enthält.

10. Auskleidungsteil nach einem der vorhergehenden Ansprüche, **dadurch gekennzeichnet, dass** das Abschlusselement bzw. die Grundplatte und der Basiskörper kraftschlüssig und feuchtigkeitsdicht, insbesondere unter Verwendung eines umlaufenden Dichtelements (12), miteinander verbunden sind.

11. Auskleidungsteil nach einem der vorhergehenden Ansprüche, **dadurch gekennzeichnet, dass** das Abschlusselement bzw. die Grundplatte und der Basiskörper an ihren jeweiligen Rückseiten hinterschäumt sind.

12. Auskleidungsteil nach Anspruch 11, **dadurch gekennzeichnet, dass** das Abschlusselement bzw. die Grundplatte und der Basiskörper am Öffnungsrand einen sich gegenseitig überlappenden Randbereich aufweisen und vorzugsweise das Abschlusselement bzw. die Grundplatte in diesem Randbereich Öffnungen (9) aufweist, durch die eine formund/oder kraftschlüssige Verbindung zwischen dem Abschlusselement bzw. der Grundplatte und dem Basiskörper durch verfestigten Schaum (5), der während eines Schäumvorgangs durch die Öffnung hindurchtritt, bewirkt wird.

13. Auskleidungsteil nach Anspruch 11 oder 12, **dadurch gekennzeichnet, dass** das Abschlusselement bzw. die Grundplatte an der Unterseite Verbindungselemente (13) aufweist, die eine form- und/oder kraftschlüssige Verbindung des Abschlusselements bzw. der Grundplatte mit dem verfestigten Schaum bewirken.

14. Auskleidungsteil nach einem der vorhergehenden Ansprüche, **dadurch gekennzeichnet, dass** der Basiskörper aus einem Teppichformteil (2) gebildet ist, das insbesonders schalenförmig geformt ist.

15. Auskleidungsteil nach einem der vorhergehenden Ansprüche, **dadurch gekennzeichnet, dass** das Einlegeelement im wesentlichen das Material ist, das zur Bildung der Öffnung des Basiskörpers aus dem Basiskörper entnommen ist.
